# EUROPEAN PATENT SPECIFICATION

(11) **EP 4 014 678 B1**
(45) Date of publication and mention of the grant of the patent: **18.06.2025**
(21) Application number: 20754133.5
(22) Date of filing: 13.08.2020
(51) Int. Cl.: H04W 76/14, H04W 76/23

(54) **SIDELINK RRC PROCEDURE**
RRC VERFAHREN FÜR SIDELINK
PROCÉDURE RRC POUR LIAISON LATÉRALE

(30) Priority: 14.08.2019 WO PCT/CN2019/100524
(43) Date of publication of application: 22.06.2022
(73) Proprietor: TELEFONAKTIEBOLAGET LM ERICSSON (PUBL), 164 83 Stockholm (SE)
(72) Inventor: ORSINO, Antonino, 02430 MASALA (FI); ZHANG, Congchi, 52062 AACHEN (DE); ZHANG, Zhang, BEIJING, 100102 (CN)
(74) Representative: Ericsson
(86) International application number: PCT/EP2020/072801
(87) International publication number: WO 2021/028549

(56) References cited:
- EP-A1- 3 416 436
- ETSI MCC: "Report of 3GPP TSG RAN2#106 meeting, Reno, USA", vol. RAN WG2, no. ; 20190513 - 20190517, 25 July 2019 (2019-07-25), XP051755563, Retrieved from the Internet <URL:http://www.3gpp.org/ftp/tsg_ran/WG2_RL2/TSGR2_106/Report/Draft_RAN2_106_Report_v3.zip> [retrieved on 20190725]
- OPPO: "Discussion on network involvement in unicast link establishment", vol. RAN WG2, no. Reno, US; 20190513 - 20190517, 13 May 2019 (2019-05-13), XP051729084, Retrieved from the Internet <URL:http://www.3gpp.org/ftp/Meetings%5F3GPP%5FSYNC/RAN2/Docs/R2%2D1905580%2Ezip> [retrieved on 20190513]
- HUAWEI: "Summary of Email Discussion [104#58][NR V2X] - QoS support for NR V2X", 15 February 2019 (2019-02-15), pages 1 - 57, XP051601766, Retrieved from the Internet <URL:http://www.3gpp.org/ftp/tsg%5Fran/WG2%5FRL2/TSGR2%5F105/Docs/R2%2D1900370%2Ezip>
- LG ELECTRONICS: "5G V2X with NR sidelink", vol. TSG RAN, no. Newport Beach, USA; 20190603 - 20190606, 2 June 2019 (2019-06-02), XP051747190, Retrieved from the Internet <URL:http://www.3gpp.org/ftp/Meetings%5F3GPP%5FSYNC/RAN/Docs/RP%2D190983%2Ezip> [retrieved on 20190602]

## Description

### Technical Field

The present disclosure relates to sidelink (SL) communication in a cellular communications system.

### Background

In Third Generation Partnership Project (3GPP), the Dual Connectivity (DC) solution has been specified, both for Long Term Evolution (LTE) and between LTE and Fifth Generation (5G) New Radio (NR). In DC, two nodes are involved, a Master Node (MN, or Master enhanced or evolved Node B (eNB) (MeNB)) and a Secondary Node (SN, or Secondary eNB (SeNB)). Multi-connectivity (MC) is the case when there are more than two nodes involved. Also, it has been proposed in 3GPP that DC is used in Ultra Reliable Low Latency Communications (URLLC) cases to enhance the robustness and to avoid connection interruptions.

There are different ways to deploy a 5G NR network with or without interworking with LTE (also referred to as Evolved Universal Terrestrial Radio Access (E-UTRA)) and Evolved Packet Core (EPC). In principle, NR and LTE can be deployed without any interworking, denoted by NR Stand-Alone (SA) operation. That is, the NR base station (gNB) in NR can be connected to the 5G Core Network (CN) (5GCN), and the eNB in LTE can be connected to the EPC with no interconnection between the two. On the other hand, the first supported version of NR is the so-called EN-DC (E-UTRAN-NR DC). In such a deployment, DC between NR and LTE is applied with LTE as the master and NR as the secondary node. The Radio Access Network (RAN) node (gNB) supporting NR may not have a control plane connection to the core network (EPC), but instead may rely on LTE as the MN (MeNB). This is also called "Non-standalone NR." Notice that, in this case, the functionality of an NR cell is limited and would be used for connected mode User Equipments (UEs) as a booster and/or diversity leg, but an RRC_IDLE UE cannot camp on these NR cells.

With introduction of 5GC, other options may be also valid. As mentioned above, Option 2 supports standalone NR deployment where the gNB is connected to the 5GC. Similarly, LTE can also be connected to the 5GCN (also known as enhanced LTE (eLTE), E-UTRA/5GC, or LTE/5GCN, with the node referred to as a Next Generation eNB (NG-eNB)). In these cases, both NR and LTE are seen as part of the Next Generation RAN (NG-RAN) (and thus both the NG-eNB and the gNB can be referred to as NG-RAN nodes). Other variants of DC between LTE and NR which will be standardized as part of NG-RAN connected to 5GC, are denoted by Multi-Radio DC (MR-DC). Thus, under the MR-DC umbrella are:
- EN-DC: LTE is the MN and NR is the SN (EPC CN employed),
- NR E-UTRA DC (NE-DC): NR is the MN and LTE is the SN (5GCN employed),
- NG-RAN E-UTRA NR DC (NGEN-DC): LTE is the MN and NR is the SN (5GCN employed), and
- NR-DC: DC where both the MN and the SN are NR (5GCN employed).

As migration for these options may differ for different operators, it is possible to have deployments with multiple options in parallel in the same network. In combination with DC solutions between LTE and NR, it is also possible to support Carrier Aggregation (CA) in each cell group (i.e., Master Cell Group (MCG) and Secondary Cell Group (SCG)) and DC between nodes on the same Radio Access Technology (RAT) (e.g., NR-NR DC). For the LTE cells, a consequence of these different deployments is the co-existence of LTE cells associated to eNBs connected to EPC, 5GC, or both EPC/5GC.

As noted earlier, DC is standardized for both LTE and EN-DC. LTE DC and EN-DC are designed differently when it comes to which nodes control what. Basically, there are two options: centralized solutions such as LTE DC, and decentralized solutions such as EN-DC.

The main difference between DC in LTE DC and EN-DC is that, in EN-DC, the SN has a separate Radio Resource Control (RRC) entity (NR RRC). This means that the SN can also control the UE, sometimes without the knowledge of the MN, but often with the need to coordinate with the MN. In LTE DC, the RRC decisions are always coming from the MN (MN to UE). Note, however, that the SN still decides the configuration of the SN since it is only the SN itself that has knowledge of the resources, capabilities, etc. of the SN.

For EN-DC, the major changes compared to LTE DC are as follows:
- the introduction of a split bearer from the SN (known as an SCG split bearer),
- the introduction of a split bearer for RRC, and
- the introduction of a direct RRC from the SN (also referred to as an SCG Signaling Radio Bearer (SRB)).

The SN is sometimes referred to as a Secondary gNB (SgNB) (where gNB is an NR base station), and the MN as MeNB in case the LTE is the MN and NR is the SN. In the other case where NR is the MN and LTE is the SN, the corresponding terms are SeNB and Master gNB (MgNB).

Split RRC messages are mainly used for creating diversity, and the sender can decide to either choose one of the links for scheduling the RRC messages or can duplicate the message over both links. In the downlink, the path switching between the MCG or SCG legs, or duplication of both, is left to network implementation. On the other hand, for the uplink, the network configures the UE to use the MCG, SCG, or both legs. The terms "leg," "path," and "Radio Link Control (RLC) bearer" are used interchangeably throughout this document.

Inter-node RRC messages are RRC messages that are sent either across the X2-, Xn-, or the NG-interface, either to or from the gNB, i.e., a single 'logical channel' is used for all RRC messages transferred across network nodes. The information could originate from or be destined for another RAT. In this regard, Table 1 below provides an excerpt from 3GPP Technical Specification (TS) 38.331 V15.6.0.

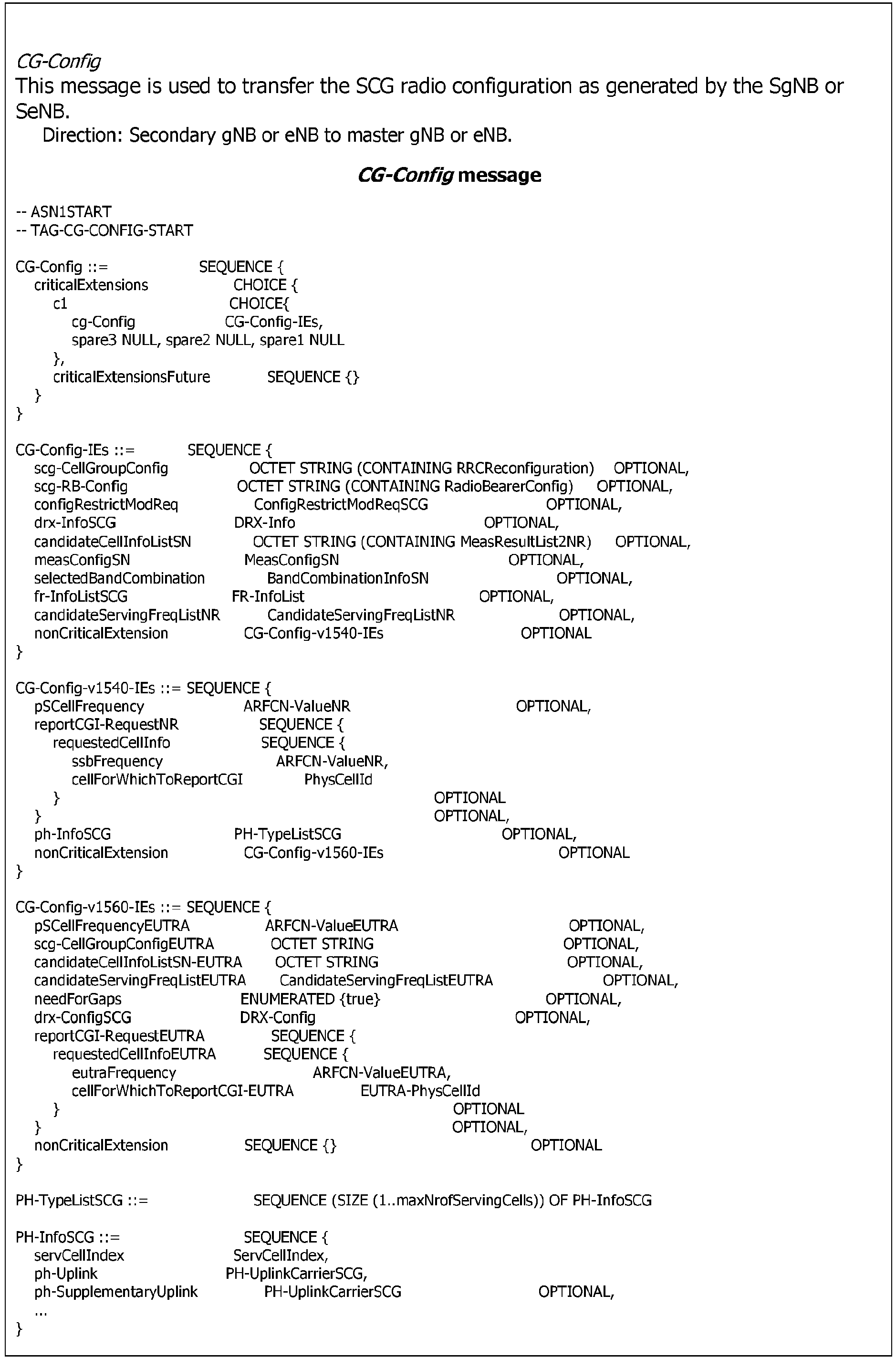

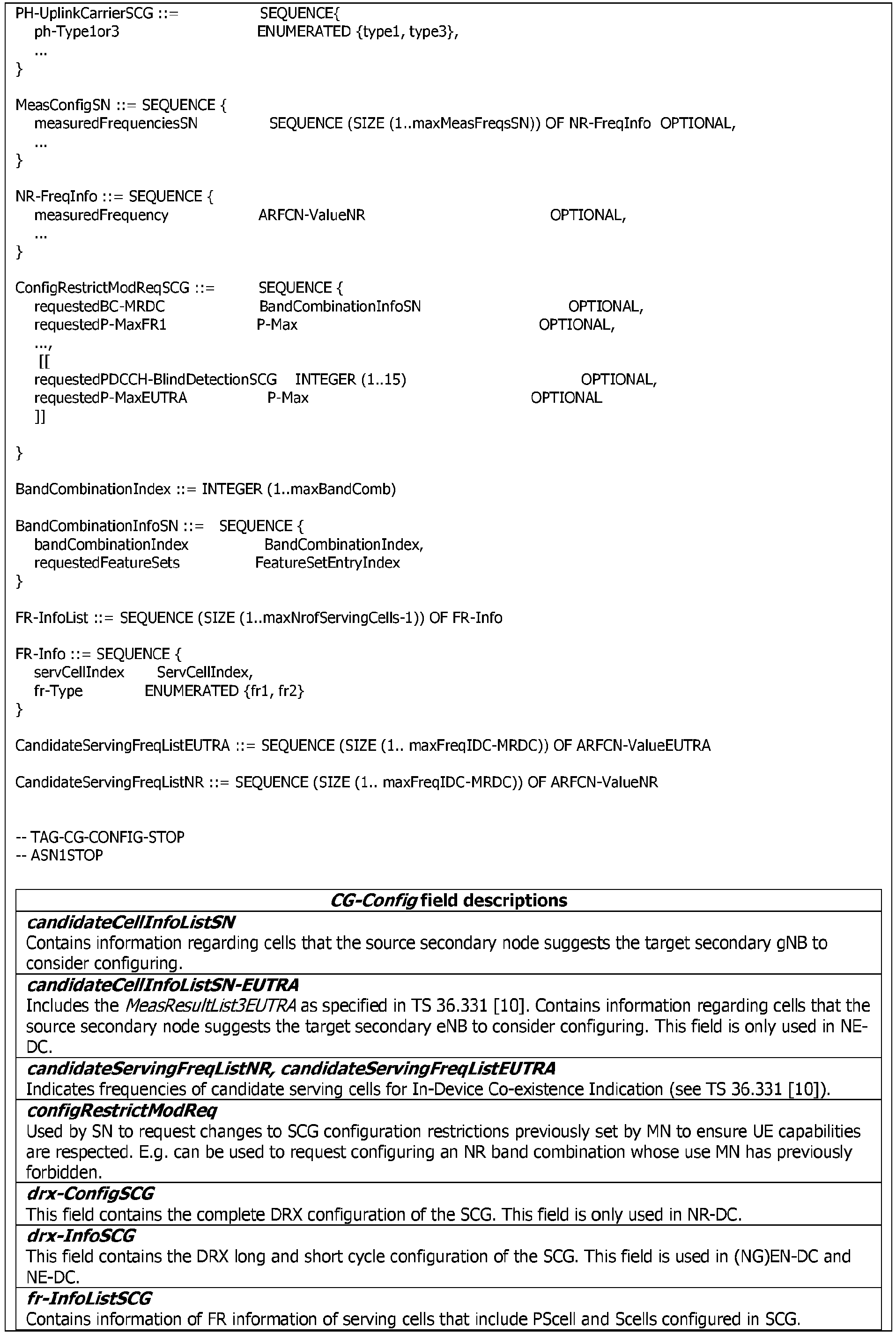

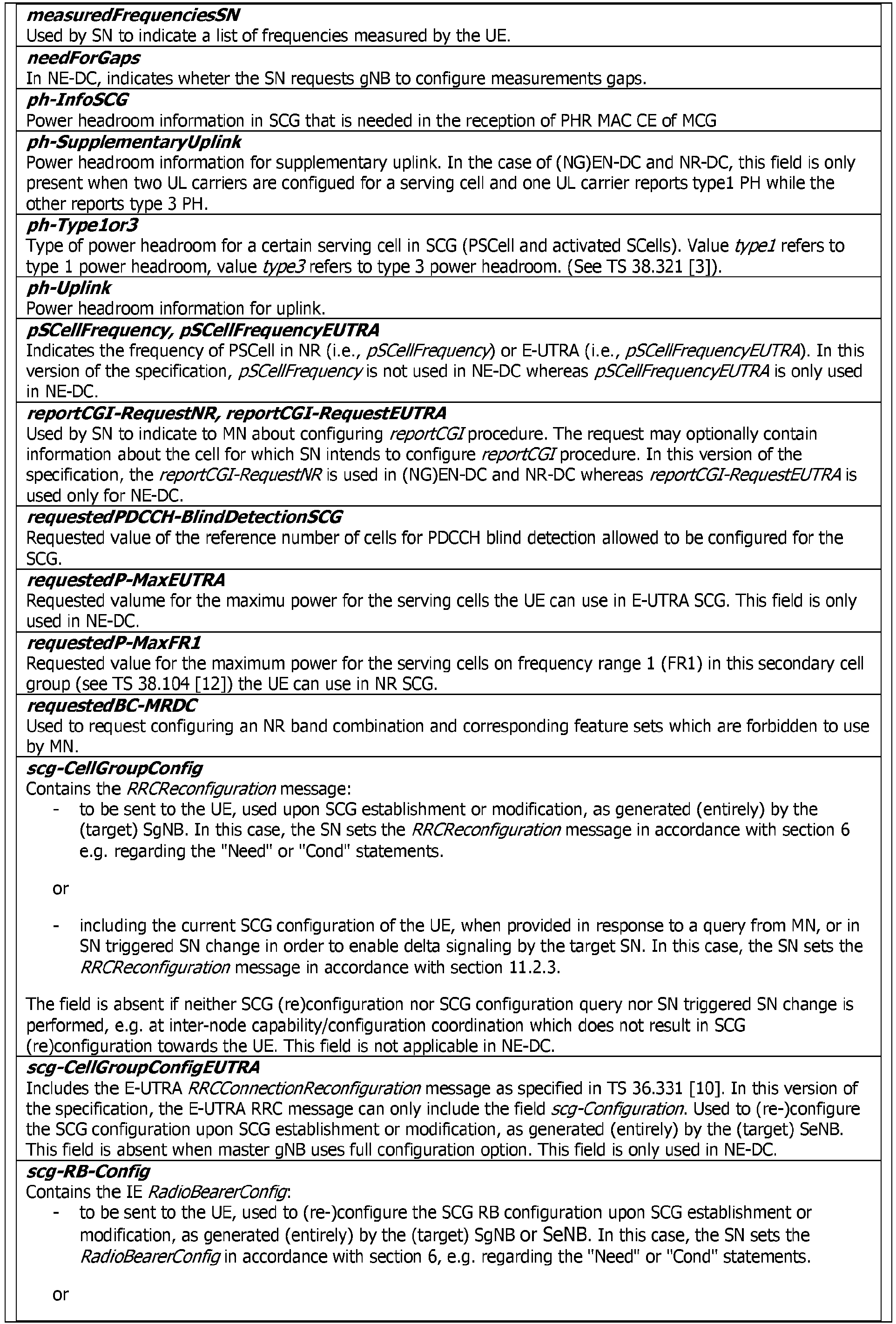

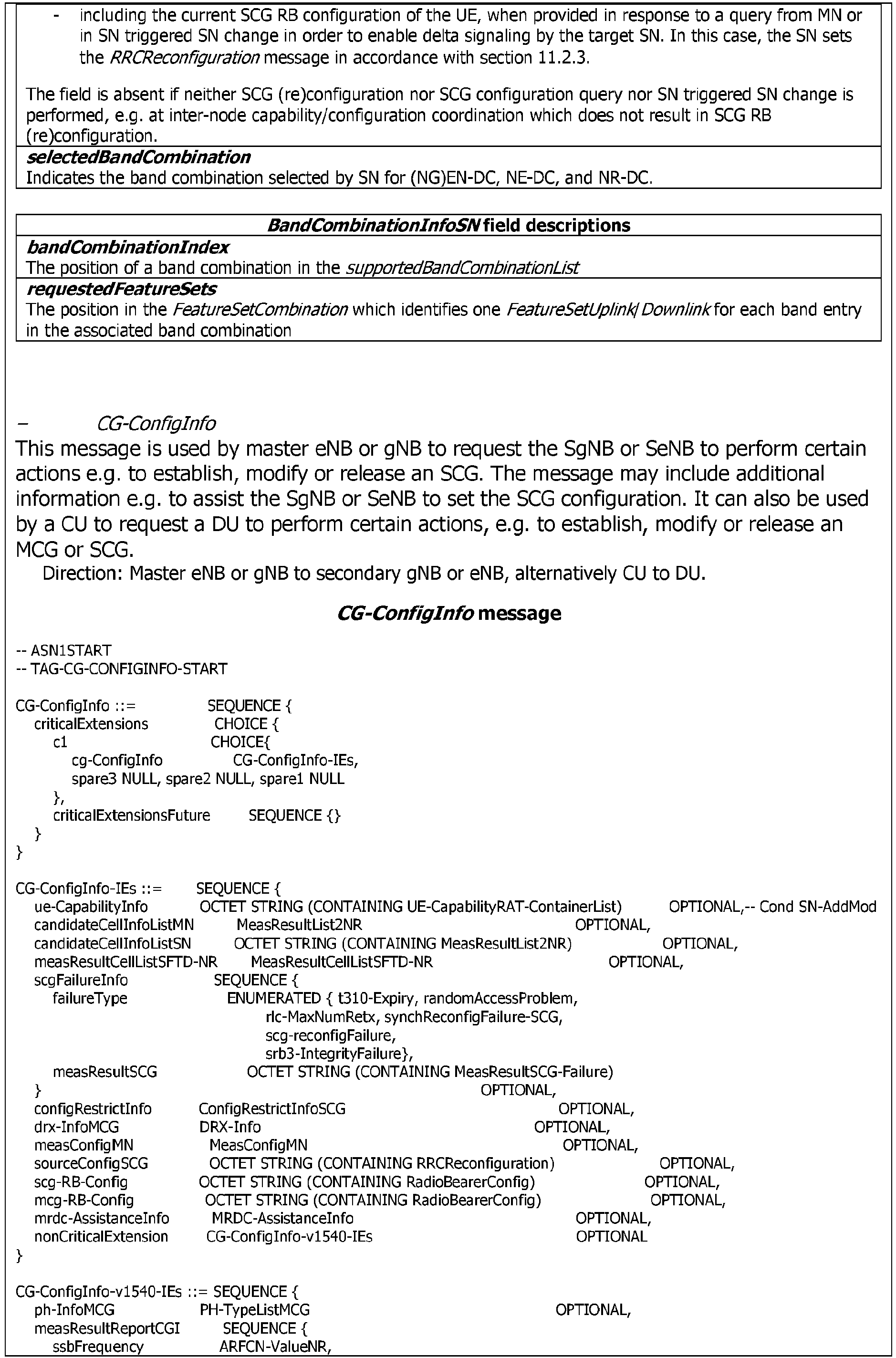

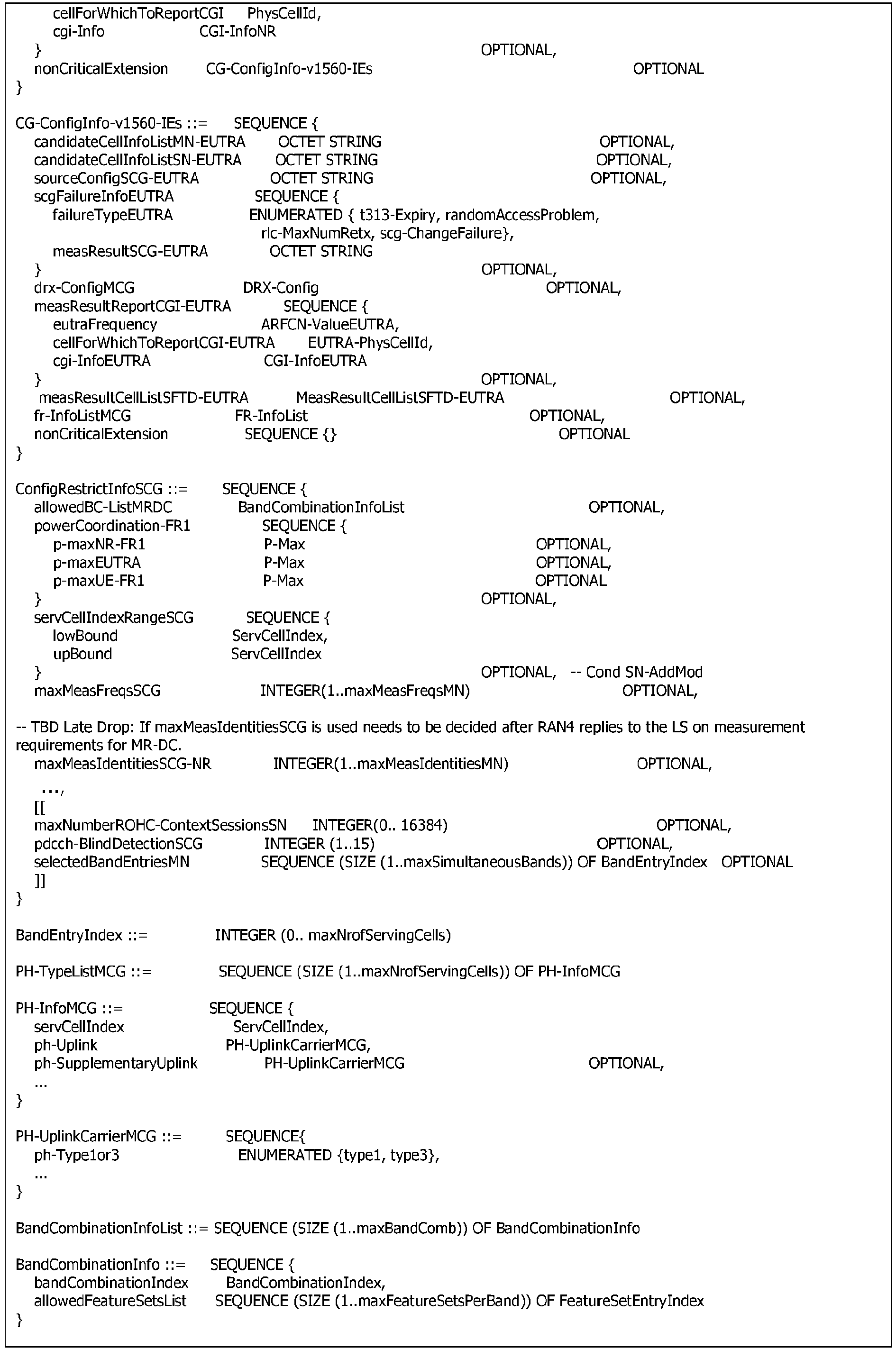

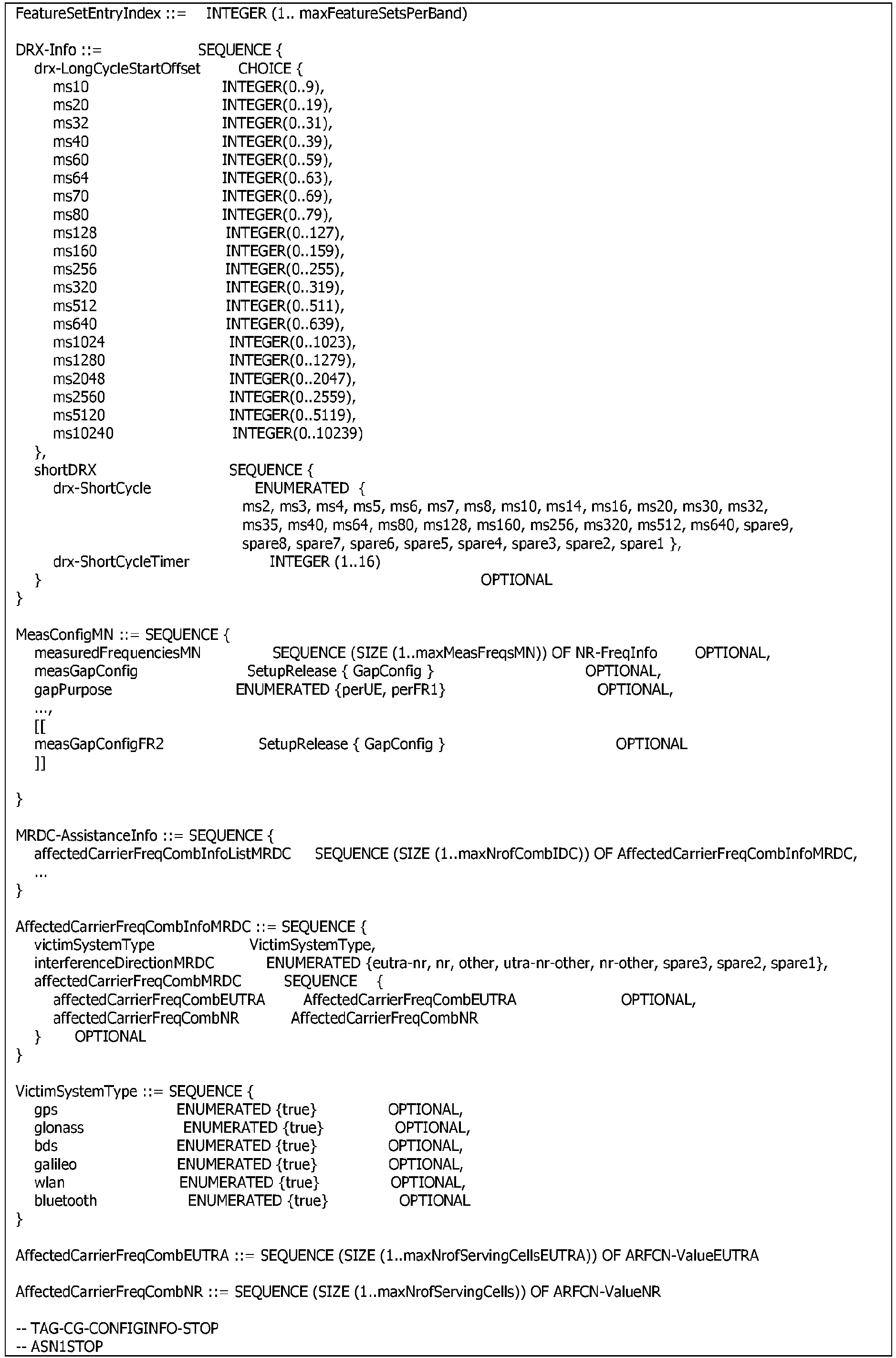

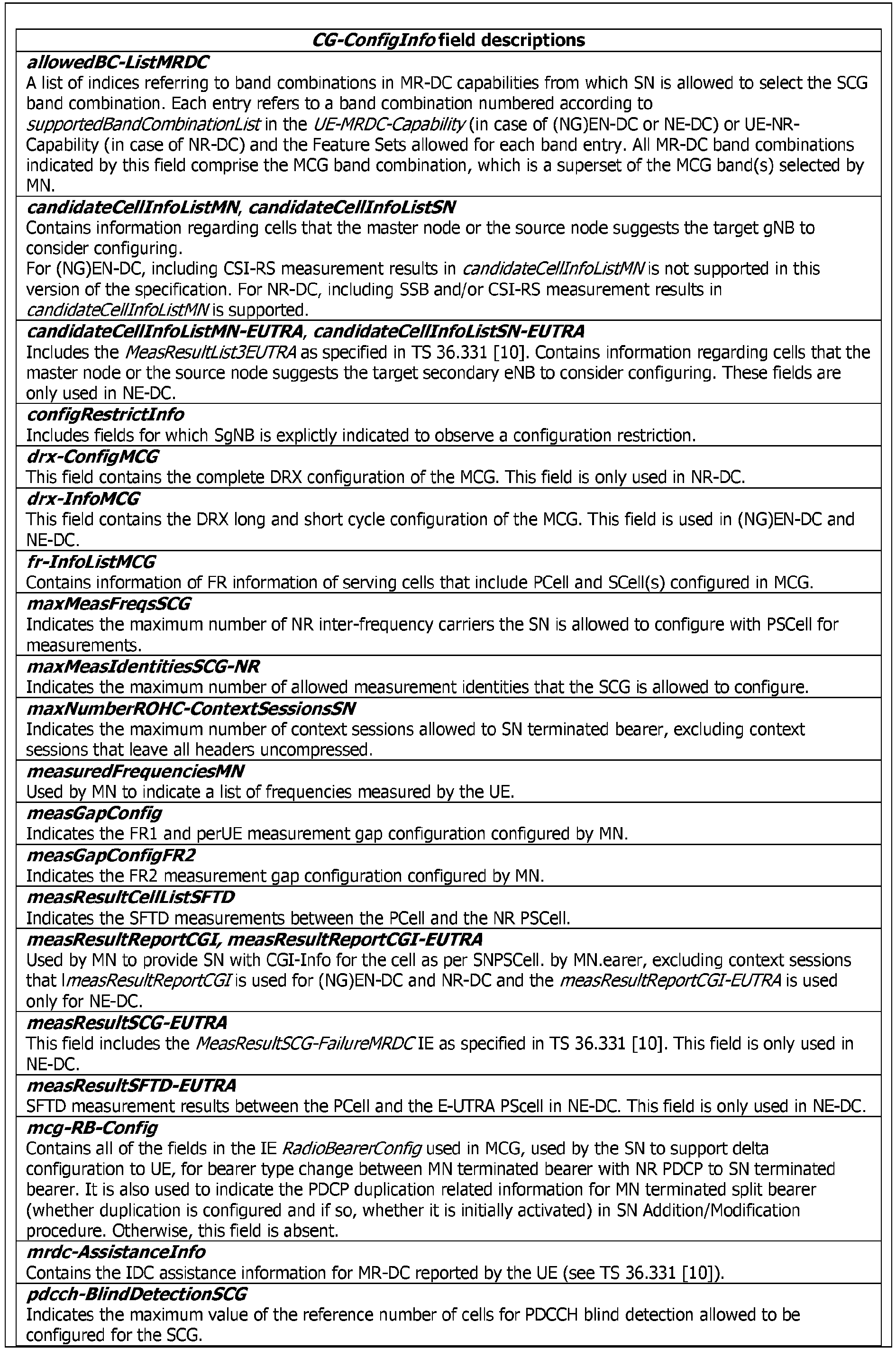

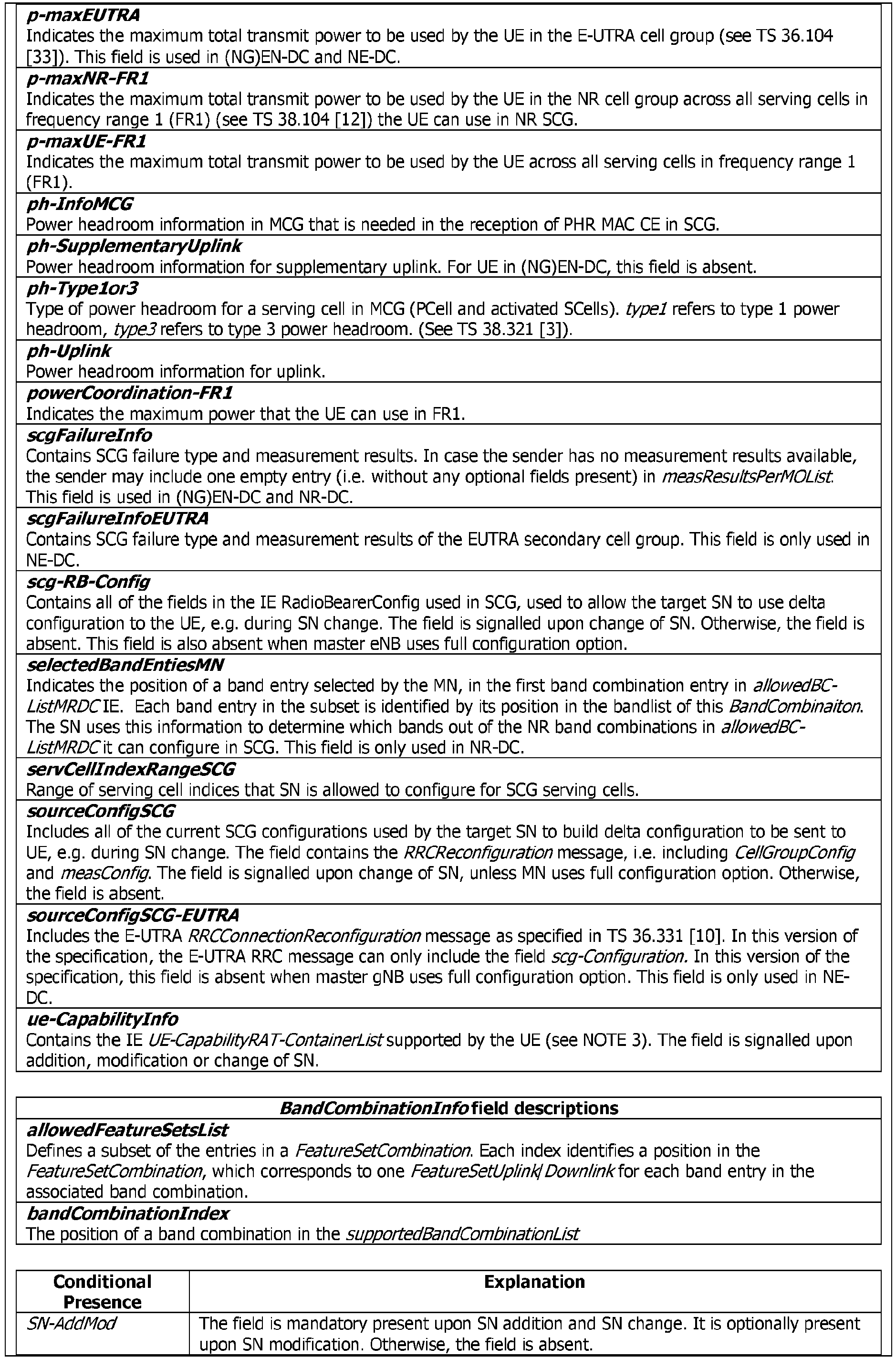

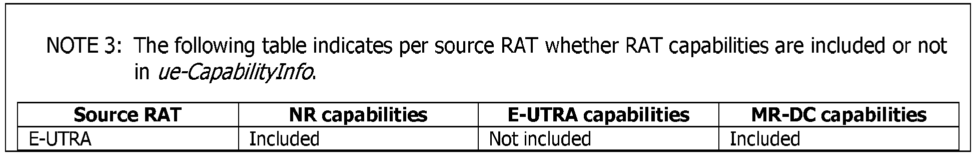

Cellular Intelligent Transport Systems (ITS) (C-ITS) aim to define a new cellular ecosystem for the delivery of vehicular services and their dissemination. Such an ecosystem includes both short range and long range V2X service transmissions. In particular, short range communication involves transmissions over a Device-to-Device (D2D) link (also defined as a Sidelink (SL) or PC5 interface in 3GPP), towards other vehicular UEs or Road Side Units (RSUs). On the other hand, for long range transmission, it considers the transmission over the Uu interface between a UE and a base station, in which case packets may be disseminated to different ITS service providers, which could be road traffic authorities, road operators, automotive Original Equipment Manufacturers (OEMs), cellular operators, etc.

When it comes to the SL interface, the first standardization effort in 3GPP dates back to Release (Rel) 12, targeting public safety use cases. Since then, a number of enhancements have been introduced with the objective of enlarging the use cases that could benefit from the D2D technology. Particularly, in LTE Rel-14 and Rel-15, the extensions for the D2D work consists of supporting V2X communication, including any combination of direct communication between vehicles (Vehicle-to-Vehicle (V2V)), pedestrians (Vehicle-to-Pedestrian (V2P)), and infrastructure (Vehicle-to-Infrastructure (V2I)).

In RAN#80, a new Study Item named "Study on NR V2X" was approved to study the enhancement to support advanced V2X services beyond services supported in LTE Rel-15 V2X. One of the objectives for NR V2X design is to study technical solutions for Quality of Service (QoS) management of the radio interface including both Uu (i.e., network-to-vehicle UE communication) and SL (i.e., vehicle UE-to-vehicle UE communication) used for V2X operations.

While LTE V2X mainly aims at traffic safety services, NR V2X has a much broader scope that not only includes basic safety services, but also targets non-safety applications such as extended sensor/data sharing between vehicles, with the objective of strengthening the perception of the surrounding environment of vehicles. Hence, a new set of applications have been captured in 3GPP Technical Report (TR) 22.886 V16.2.0 that would require an enhanced NR system and new NR SL framework. These applications include advanced driving, vehicle platooning, cooperative maneuvers between vehicles, and remote driving.

In this new context, the expected requirements to meet the needed data rate, capacity, reliability, latency, communication range, and speed are made more stringent. Additionally, both PC5 and Uu communication interfaces could be used to support the advanced V2X use cases, taking into account radio conditions and the environment where the enhanced V2X (eV2X) scenario takes place. For example, given the variety of services that can be transmitted over the SL, a robust QoS framework which takes into account the different performance requirements of the different V2X services seems to be needed. Additionally, NR protocols to handle more robust and reliable communication should be designed. All of these issues are currently under the investigation of 3GPP in NR Rel-16.

In NR, a SL QoS flow model is adopted. At the Non-Access Stratum (NAS) layer, the UE maps one V2X packet into the corresponding SL QoS flow and then maps to an SL radio bearer at the Service Data Adaptation Protocol (SDAP) layer.

In NR, SL Radio Bearer (SLRB) configuration, including the SL QoS flow to SLRB mapping, is either preconfigured or configured by the network when the UE is in coverage. For instance, when the UE wants to establish a new SL QoS flow/SLRB for a new service, the UE can send a request to the associated gNB. The request can include the QoS information of the service. The gNB then determines the appropriate SLRB configuration to support such an SL QoS flow. After receiving the SLRB configuration from the gNB, the UE establishes the local SLRB accordingly and prepares for data transmission over the SL. Note that to enable successful reception at the reception (RX) UE, the transmission (TX) UE might have to inform the RX UE regarding necessary parameters (e.g., sequence number space for Packet Data Convergence Protocol (PDCP)/RLC) before the data transmission starts.

RRC operation depends on the UE specific states. A UE is in either in RRC_CONNECTED state, RRC_INACTIVE state, or RRC_IDLE state. The different RRC states have different amounts of radio resources associated with them that the UE may use in that specific state. In RRC_INACTIVE and RRC_IDLE state, UE controlled mobility based on network configuration is adopted (i.e., the UE acquires System Information Block (SIB), performs neighboring cell measurements and cell selection and re-selection, and monitors a paging occasion). An inactive UE stores the UE inactive Access Stratum (AS) context and performs RAN-based Notification Area (RNA) updates.

In RRC_CONNECTED state, however, network-controlled mobility is performed. In fact, the RAN node can receive paging assistance information related to potential paging triggers, such as QoS flows or signaling, from the 5GCN. The UE is thus known by the network at the node/cell level, and a UE specific bearer is established upon which UE specific data and/or control signaling could be communicated. For example, the RAN can configure UE-specific RNAs that make it possible to reduce the total signaling load by configuring small RNAs for stationary UEs (optimized for low paging load) and, especially, larger RNAs for moving UEs (optimized for vehicular UEs).

Furthermore, if, e.g., there is no traffic transmission and/or reception for a certain time period, the network can initiate the RRC connection release procedure to transmit a UE in RRC_CONNECTED to RRC_IDLE; or to RRC_INACTIVE if SRB2 and at least one Data Radio Bearer (DRB) is set up in RRC_CONNECTED.

There are two different Resource Allocation (RA) procedures for V2X on SL, i.e., network-controlled RA (so called "mode 3" in LTE and "mode 1" in NR) and autonomous RA (so called "mode 4" in LTE and "mode 2" in NR). The transmission resources are selected within a resource pool which is, e.g., predefined or configured by the network.

With network-controlled RA, NG-RAN is in charge of scheduling SL resource(s) to be used by the UE for SL transmission(s). The UE sends an SL Buffer Status Report (BSR) to the network to inform the network about SL data available for transmission in the SL buffers associated with the Medium Access Control (MAC) entity. The network then signals the resource allocation to the UE using Downlink Control Information (DCI). Network-controlled (or mode 1) RA may be realized via dynamic scheduling signalling via the Physical Downlink Control Channel (PDCCH), or by semi-persistent scheduling in which the gNB provides one or more configured SL grants. Both type-1 and type-2 configured SL grants are supported.

With autonomous RA, each device independently decides which SL radio resources to use for SL operations based on, e.g., sensing. For both RA modes, SL Control Information (SCI) is transmitted on the Physical Sidelink Control Channel (PSCCH) to indicate the assigned SL resources for the PSSCH. Unlike network-controlled RA, which can only be performed when the UE is in RRC_CONNECTED state, autonomous RA (or mode 2) can be performed both when the UE is in RRC_CONNECTED state and when the UE is in INACTIVE/IDLE state, and also when the UE is under Uu coverage and out-of-coverage. In particular, when the UE is in RRC_CONNECTED state, the SL resource pool can be configured with dedicated RRC signalling, while for IDLE/INACTIVE mode operations, the UE shall rely on the SL resource pool provisioned in the broadcasting signal, i.e., SIB.

Currently, as part of the NR-V2X study item, 3GPP is investigating possible extension of such mode 2. For example, 3GPP is considering the possibility of introducing a new UE functionality in which a UE, under certain conditions (e.g., for groupcast SL communication), is allowed to provision other UEs with a mode 2 pool to be used for SL communication (e.g., for SL communication within a group of UEs, such as a platoon of vehicles).

Configured grant is supported for NR SL, for both type 1 and type 2. With configured grant, the gNB can allocate SL resources for multiple (periodical) transmissions to the UE. Type 1 configured grant is configured and activated directly via dedicated RRC signaling. Type 2 configured grant is configured via dedicated RRC signaling, but only activated/released via DCI transmitted on PDCCH.

Draft 3GPP document RP-190983, titled "Status Report to TSG", "5G V2X with NR sidelink", discusses agreements on NR SL QoS and SLRB configurations.

### Summary

Devices and methods are disclosed herein for enabling a Sidelink (SL) User Equipment (UE) to send a Radio Resource Control (RRC) message to the network in order to request an RRC procedure in association with an SL. Embodiments of a method implemented in an SL UE are disclosed herein. The claimed invention includes a method implemented in a User Equipment as defined in claim 1.

The RRC procedure comprises either an SL configuration procedure or an SL configuration update procedure. In some embodiments, detecting the trigger for sending the RRC message comprises detecting one or more criteria, the one or more criteria comprising a criterion that an SL Radio Bearer (SLRB) reconfiguration is needed, a criterion that there is a new SL Quality of Service (QoS) flow but no QoS mapping for the new SL QoS flow, a criterion that a new SL QoS mapping is needed, a criterion of a change in an SL-related UE context at the SL UE, or a criterion of performance of one or more autonomous SL-related actions by the SL UE. In some embodiments, the criterion of performance of the one or more autonomous SL-related actions by the SL UE comprises a criterion of autonomously deciding a new SL-related QoS mapping rule or a criterion of autonomously updating an SL-related UE context.

In some embodiments, sending the RRC information or message to the network node comprises sending the RRC message to the network node upon detecting the trigger. According to some embodiments, detecting the trigger for sending the RRC message comprises detecting the trigger for sending the RRC message while the SL UE is in an idle or inactive state, and sending the RRC message to the network node comprises sending the RRC message to the network node upon detecting the trigger and transitioning from the idle or inactive state to a connected state. In some embodiments, sending the RRC message to the network node comprises sending the RRC message to the network node when in a connected state, and the RRC message comprises an existing SL-related RRC message. Some such embodiments provide that the existing SL-related RRC message comprises a SidelinkUEInformation message.

In some embodiments, sending the RRC message to the network node comprises sending the RRC message to the network node when in a connected state, and the RRC message comprises an existing NR or Long Term Evolution (LTE) RRC message. Some such embodiments provide that the existing NR or LTE RRC message comprises a UEAssistanceInformation message, a ULInformationTransfer message, or a ULInformationTransferMRDC message. In some embodiments, sending the RRC message to the network node comprises sending the RRC message to the network node when in a connected state, and the RRC message comprises a new RRC message that is common for two or more Radio Access Technologies (RATs). According to some embodiments, sending the RRC message to the network node comprises sending the RRC message to the network node when in a connected state, and the RRC message comprises a new RRC message that is for SL only.

In some embodiments, sending the RRC information or message to the network node comprises sending the RRC message to the network node when in an idle or inactive state, and the RRC message comprises an existing RRC message. Some such embodiments provide that the existing RRC message comprises an RRCResumeRequest message or an RRCSetupRequest message. In some embodiments, sending the RRC message to the network node comprises sending the RRC message to the network node when in an idle or inactive state, and the RRC message comprises a new RRC message that is common for two or more RATs. According to some embodiments, sending the RRC message to the network node comprises sending the RRC message to the network node when in an idle or inactive state, and the RRC message comprises a new RRC message that is used for SL only.

In some embodiments, the RRC message comprises a flag that indicates a request for a new SLRB configuration. Some embodiments provide that the RRC message comprises QoS flow information for one or more QoS flows at the SL UE. According to some embodiments, the RRC message further comprises an indication of one or more new QoS mappings needed for the one or more QoS flows. In some embodiments, the RRC message comprises a new SL-related UE context for the SL UE.

According to some embodiments, the method further comprises receiving a response from either the network node or another network node. In some embodiments, the response comprises one or more SL-related configurations or one or more updates to one or more SL-related configurations. Some embodiments provide that the method further comprises taking one or more actions based on the response. In some embodiments, the network node comprises a base station. According to some embodiments, the SL UE uses Dual Connectivity (DC), and the network node comprises a Master Node (MN) of the SL UE. Some embodiments provide that the SL UE uses DC, and the network node comprises a Secondary Node (SN) of the SL UE.

The claimed invention provides also a SL UE as defined in claim 10.

The claimed invention also provides a method implemented in a network node as defined in claim 11. The method further comprises taking one or more actions based on the RRC message. According to some embodiments, the one or more actions comprise sending the RRC message or information in the RRC message to another network node. In some embodiments, the one or more actions comprise sending a response to the SL UE, and the response comprises the one or more SL-related configurations for the SL UE or one or more updates to the one or more SL-related configurations for the SL UE.

In some embodiments, the RRC message comprises either the request for the RRC procedure related to the one or more SL-related configurations, or the message that both requests the RRC procedure related to the one or more SL-related configurations and comprises the information about the one or more changes made by the SL UE related to the one or more SL configurations. In some embodiments, receiving the RRC message from the SL UE comprises receiving the RRC message from the SL UE while the SL UE is in a connected state, and the RRC message comprises an existing SL-related RRC message. According to some such embodiments, the existing SL-related RRC message comprises a SidelinkUEInformation message.

In some embodiments, receiving the RRC message from the SL UE comprises receiving the RRC message from the SL UE while the SL UE is in a connected state, and the RRC message comprises an existing NR or LTE RRC message. Some such embodiments provide that the existing NR or LTE RRC message comprises a UEAssistanceInformation message, a ULInformationTransfer message, or a ULInformationTransferMRDC message. In some embodiments, receiving the RRC message from the SL UE comprises receiving the RRC message from the SL UE while the SL UE is in a connected state, and the RRC message comprises a new RRC message that is common for two or more RATs. Some embodiments provide that receiving the RRC message from the SL UE comprises receiving the RRC message from the SL UE while the SL UE is in a connected state, and the RRC message comprises a new RRC message that is for SL only. According to some embodiments, receiving the RRC message from the SL UE comprises receiving the RRC message from the SL UE while the SL UE is in an idle or inactive state, and the RRC message comprises an existing RRC message. In some such embodiments, the existing RRC message comprises an RRCResumeRequest message or an RRCSetupRequest message.

In some embodiments, receiving the RRC message from the SL UE comprises receiving the RRC message from the SL UE while the SL UE is in an idle or inactive state, and the RRC message comprises a new RRC message that is common for two or more RATs. According to some embodiments, receiving the RRC message from the SL UE comprises receiving the RRC message from the SL UE while the SL UE is in an idle or inactive state, and the RRC message comprises a new RRC message that is used for SL only. Some embodiments provide that the RRC message comprises a flag that indicates a request for a new SLRB configuration. In some embodiments, the RRC message comprises QoS flow information for one or more QoS flows at the SL UE. Some such embodiments provide that the RRC message further comprises an indication of one or more new QoS mappings needed for the one or more QoS flows.

In some embodiments, the RRC message comprises a new SL-related UE context for the SL UE. Some embodiments provide that the network node comprises a base station. According to some embodiments, the SL UE uses DC, and the base station comprises an MN of the SL UE. In some embodiments, the SL UE uses DC, and the base station comprises an SN of the SL UE.

The claimed invention provides also a base station as defined in claim 15. The base station is adapted to receive an RRC message from an SL UE, wherein the RRC message is a request for an RRC procedure related to one or more SL-related configurations, a message comprising information about one or more changes made by the SL UE related to one or more SL configurations, or a message that both requests the RRC procedure related to the one or more SL-related configurations and comprises the information about the one or more changes made by the SL UE related to the one or more SL configurations, wherein the RRC procedure comprises either an SL configuration procedure or an SL configuration update procedure. The base station is further adapted to take one or more actions based on the RRC message. In some embodiments, the base station is also adapted to perform any of the steps attributed to the base station in the above-disclosed methods. The invention is carried out according to the appended independent claims. Optional features of the invention are carried out according to the dependent claims.

### Brief Description of the Drawings

The accompanying drawing figures incorporated in and forming a part of this specification illustrate several aspects of the disclosure, and together with the description serve to explain the principles of the disclosure.
Figure 1 illustrates one example of a cellular communications system in which embodiments of the present disclosure may be implemented;
Figure 2 illustrates the operation of a base station and an SL User Equipment (UE) in accordance with some embodiments of the present disclosure;
Figure 3 is a schematic block diagram of a radio access node according to some embodiments of the present disclosure;
Figure 4 is a schematic block diagram that illustrates a virtualized embodiment of the radio access node of Figure 3 according to some embodiments of the present disclosure; and
Figure 5 is a schematic block diagram of a UE according to some embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless device.

**Radio Access Node:** As used herein, a "radio access node" or "radio network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a lowpower base station (e.g., a micro base station, a pico base station, a home eNB, or the like), and a relay node.

**Core Network Node:** As used herein, a "core network node" is any type of node in a Core Network (CN) or any node that implements a CN function. Some examples of a CN node include, e.g., a Mobility Management Entity (MME), a Packet Data Network Gateway (P-GW), a Service Capability Exposure Function (SCEF), a Home Subscriber Server (HSS), or the like. Some other examples of a CN node include a node implementing a Access and Mobility Function (AMF), a User Plane (UP) Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device.

**Sidelink Wireless Device:** As used herein, a "sidelink wireless device," "sidelink capable wireless device," "sidelink UE," or "sidelink capable UE" is a wireless device or UE capable of Sidelink (SL) communication.

**Network Node:** As used herein, a "network node" is any node that is either part of the RAN or the CN of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

In NR, SL Radio Bearer (SLRB) configuration, including the SL Quality of Service (QoS) flow to SLRB mapping, is either preconfigured or configured by the network when the UE is in coverage. For this latter case, at the moment, there is no signaling support on how the UE may request an SLRB reconfiguration or new SLRB configuration to support a new SL QoS flow. This lack of signaling not only impacts the SLRB configuration to the QoS flow mapping, but it may also impact other Radio Resource Control (RRC) procedures, e.g., updating the UE SL context at the network side. In particular, if the UE is not able to request a certain RRC procedure to the network, this will lead to SL (re)configuration errors, connectivity interruptions, and signaling overhead.

Systems and methods are disclosed herein for enabling an SL UE to send an RRC message to the network in order to request an RRC procedure in association with an SL from the network (or to just send an indication to the network), e.g., when certain circumstances happen (e.g., when new QoS flows pop up in the SL UE, SL UE context becomes un-synchronized with that one stored at the gNB/eNB, or a new SLRB configuration is required). The requested RRC procedure is a new SL configuration or an SL configuration update. The same RRC procedure can also be used to send an indication to the network by the SL UE. In this way, (re)configuration errors, connectivity interruption, and signaling overhead among the SL UEs and the network can be prevented.

In some embodiments, an SL UE may request an RRC procedure (or send just an indication) to the network when certain circumstances happen (e.g., new QoS flows pop up in the SL UE, SL UE context becomes un-synchronized with the one stored at the NR Base Station (gNB) / enhanced or evolved Node B (eNB), or a new SLRB configuration is required). Some example benefits of embodiments of the present disclosure may include:
- SL service continuity may be guaranteed and a new QoS flow may be correctly mapped to the SLRB without any errors.
- Signaling overhead between the SL UE and the network may be reduced since the network is aware in case the SL UE needs a new configuration, a new QoS mapping, or to synchronize the SL UE context.
- (Re)configuration errors may be avoided. The SL UE may be capable of requesting updated configuration to the network.

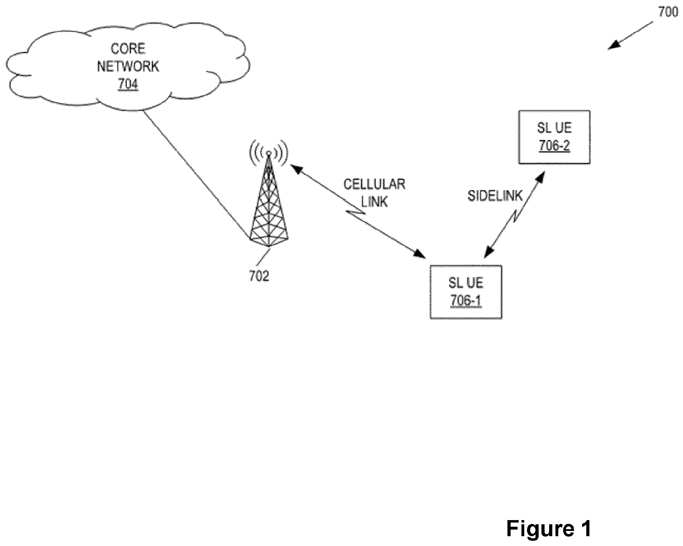

In this regard, Figure 1 illustrates one example of a cellular communications system 700 in which embodiments of the present disclosure may be implemented. In the embodiments described herein, the cellular communications system 700 is a 5G System (5GS) including an NR RAN. However, the present disclosure is not limited thereto. Rather, embodiments of the present disclosure may be implemented in other types of wireless communications systems that enable SL communications. In this example, the RAN includes a base station 702, which in 5G NR is referred to as a gNB or Next Generation RAN (NG-RAN) node, controlling a corresponding cell. The cellular communications system 700 also includes a core network 704, which in the 5GS is referred to as the 5G CN (5GCN). The core network 704 may alternatively be the Evolved Packet Core (EPC). The base station 702 is connected to the core network 704.

The cellular communications system 700 also includes SL wireless devices 706-1 and 706-2, which are also referred to herein as SL UEs 106-1 and 106-2. In this example, the SL UE 706-1 has a cellular link to the base station 702 and an SL to the other SL UE 706-2.

Now, a description of some example embodiments will be provided. Note that the following embodiments are described for NR, but they may be applied to LTE or any other Radio Access Technology (RAT). Further, the NG-RAN nodes may be connected to the 5GC or to the EPC. In case of Dual Connectivity (DC), the disclosed solution can be applied to all the Multi-Radio DC (MR-DC) options as described in, e.g., 3GPP Technical Specification (TS) 37.340 V15.6.0.

Embodiments are disclosed herein for enabling an SL UE (e.g., the SL UE 706-1) to send an RRC message to the network (e.g., to the base station 702) in order to request an RRC procedure or inform the network about some change(s) or situation(s) in SL communications. The requested RRC procedure may be (but is not limited to) a new SL configuration or a configuration update. The same RRC procedure can also be used to send an indication to the network by the SL UE. Alternatively, the SL UE may decide itself to take some action(s) (e.g., decide a new QoS mapping rule) and then inform the network via an (e.g., new) RRC message.

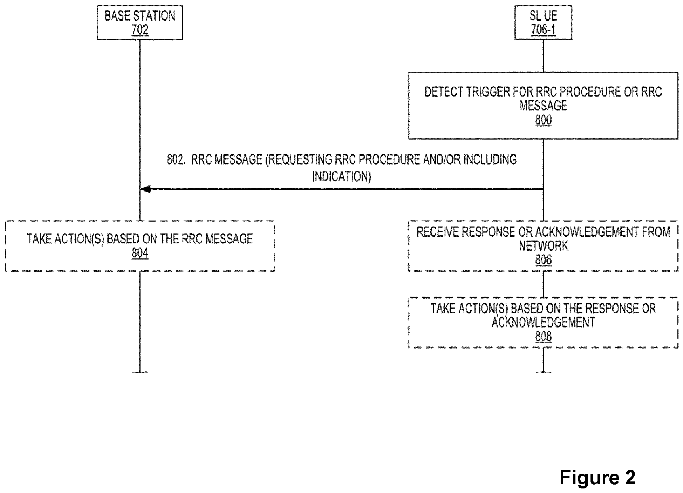

In this regard, Figure 2 illustrates the operation of the base station 702 and the SL UE 706-1 in accordance with various embodiments of the present disclosure. As illustrated, the SL UE 706-1 detects a trigger (e.g., detects one or more triggering events or conditions) for sending an RRC message to the network for requesting an RRC procedure for SL-related configurations (SL configuration or SL configuration update) and/or for sending an RRC message to the network with an indication (e.g., information that indicates, to the network, one or more SL-related configurations autonomously made, changed, or updated by the SL UE) (step 800). In some embodiments, the SL UE 706-1 detects a trigger for sending an RRC message to the network for requesting an RRC procedure for SL-related configurations. This detection is the detection that one or more (e.g., predefined or preconfigured) criteria for triggering this RRC procedure request are satisfied. In one embodiment, the one or more (e.g., predefined or preconfigured) criteria for triggering the RRC procedure request for SL-related configurations by the SL UE 706-1 include the need of an SLRB reconfiguration, e.g., due to changed radio conditions or (re)configuration errors. In another embodiment, the one or more (e.g., predefined or preconfigured) criteria for triggering the RRC procedure request for SL-related configurations by the SL UE 706-1 is when there is a new SL QoS flow but there is no clear QoS mapping (i.e., SL QoS flow to SL SLRB), or a new SL QoS mapping is needed from the network (e.g., the current SL SLRB cannot fulfill the SL QoS flow requirement). In another embodiment, the one or more (e.g., predefined or preconfigured) criteria for triggering the RRC procedure request for SL-related configurations by the SL UE 706-1 is when the SL-related UE context has changed at the SL UE 706-1 side (e.g., update of the destination L2 Identity (ID) or new SL unicast link) and this needs to be updated at the network side (e.g., to prevent a wrong SL-related UE context retrieval or sending during handover procedure).

In another embodiment, the trigger for the RRC procedure (e.g., the trigger for an RRC procedure request for SL-related configurations) is the performance, by the SL UE 706-1, of an autonomous action(s) such as, e.g., deciding a new QoS mapping rule or updating the SL-related UE context autonomously. Upon the SL UE 706-1 performing an autonomous action(s) (e.g., deciding a new QoS mapping rule or updating the SL-related UE context autonomously), the SL UE 706-1 detects this trigger for the RRC procedure request for SL-related configurations in order to inform the network of the change(s) that have happened. In another embodiment, the SL UE 706-1 performs autonomous actions when in RRC_IDLE/RRC_INACTIVE states or out of coverage, but triggers the RRC procedure over Uu once the SL UE 706-1 enters the RRC_CONNECTED state for informing the network of the SL-related changes that have happened.

Upon detecting the trigger, the SL UE 706-1 sends the triggered RRC message (e.g., a message requesting an RRC procedure or a message including an indication) to the base station 702 (step 802). As discussed above, the SL UE 706-1 may send the RRC message immediately upon detecting the trigger or at some later time (e.g., after transitioning from RRC_IDLE/RRC_INACTIVE state to RRC_CONNECTED state).

In one embodiment, when the UE is in RRC_CONNECTED state, the RRC message in step 802 is transmitted over the Uu interface for requesting and/or informing the SL-related configurations. In some embodiments, this RRC message sent over the Uu interface is an existing SL-related message such as the SidelinkUEInformation message. In one embodiment, when the UE is in RRC_CONNECTED state, the RRC message used for requesting and/or informing the SL-related configurations is an existing NR (or LTE) message such as the UEAssistanceInformation, ULInformationTransfer, or ULInformationTransferMRDC (i.e., if DC is enabled) message. In an alternative embodiment, when the SL UE 706-1 is in RRC_CONNECTED state, the RRC message used for requesting and/or informing the SL-related configurations is a new RRC message that is common for any RATs (SL, NR, or LTE). Further, in another embodiment, when the SL UE 706-1 is in RRC_CONNECTED state, the RRC message used for requesting and/or informing the SL-related configurations is a new RRC message that is used only in SL.

In one embodiment, when the SL UE 706-1 is in RRC_IDLE/RRC_INACTIVE state, the RRC message used for requesting and/or informing the SL-related configurations is an existing message such as RRCResumeRequest or the RRCSetupRequest message. In another embodiment, when the SL UE 706-1 is in RRC_IDLE/RRC_INACTIVE state, the RRC message used for requesting and/or informing the SL-related configurations is a new RRC message that is common for any RATs. In another embodiment, when the SL UE 706-1 is in RRC_IDLE/RRC_INACTIVE state, the RRC message used for requesting and/or informing the SL-related configurations is a new RRC message that is used only for SL.

In one embodiment, the content of the RRC message sent by the SL UE 706-1 used for requesting and/or informing the SL-related configurations includes a flag for requesting a new SLRB configuration. In another embodiment, the content of the RRC message sent by the SL UE 706-1 used for requesting and/or informing the SL-related configurations includes new QoS flow(s) information together with an indication of a new QoS mapping needed for the included QoS flow(s). In another embodiment, the content of the RRC message sent by the SL UE 706-1 used for requesting and/or informing the SL-related configurations includes a new SL-related UE context to be stored at the network side (e.g., the gNB, eNB, Next Generation eNB (NG-eNB)).

In one embodiment, the UE sends the RRC message for requesting SL-related configurations to the network via, e.g., SRB1. If DC is enabled, in another embodiment the UE could send such RRC message to the primary network node via, e.g., SRB1. In an alternative embodiment, the UE could send such RRC message to the secondary network node via, e.g., SRB3.

In another embodiment, the SL capable UE receives the response/acknowledgment for such RRC message from the primary node. In one embodiment, the SL capable UE receives the response/acknowledgment for such RRC message from a Secondary Node (SN).

Upon receiving the RRC message, the base station 702 performs one or more actions based on the RRC message (step 804). In one embodiment, upon receiving the RRC message for requesting SL-related configurations from the SL capable UE, the base station 702 sends a response/acknowledgment to the SL UE 706-1. In one embodiment, the response/acknowledgment is an existing RRC message such as (but not limited to) the RRCReconfiguration if the SL UE 706-1 is in RRC_CONNECTED state. Alternatively, in one embodiment, the response/acknowledgment is an existing RRC message such as (but not limited to) the RRCResume, RRCSetup, or Paging message if the SL UE 706-1 is in RRC_IDLE/RRC_INACTIVE.

In one embodiment, if DC is enabled, the base station 702 is the primary network node (e.g., the Master Node (MN)), and, upon receiving the RRC message for requesting SL-related configurations from the SL UE 706-1, the primary network node (e.g., the MN) forwards the RRC message to the secondary node (e.g., the SN) via inter-node control messages. Further, in one embodiment, upon receiving the RRC message for requesting the SL-related configurations forwarded from the primary node (e.g., the MN), the secondary network node (e.g., the SN) generates an RRC message for triggering the requested RRC procedure and forwards the message to the primary node. The primary node then proceeds to forward the message by, e.g., embedding it in a Master Cell Group (MCG) RRC message to the SL UE 706-1 via, e.g., SRB1. In another embodiment, upon receiving the RRC message for requesting the SL-related configurations forwarded from the primary node (e.g., the MN), the secondary network node (e.g., the SN) sends a direct RRC message to trigger the requested RRC procedure to the SL UE 706-1 via, e.g., SRB3.

In another embodiment, if DC is enabled, the base station 702 is the secondary node (e.g., the SN), and, upon receiving the RRC message for requesting the SL-related configurations from the SL UE 706-1, the secondary network node (e.g., the SN) forwards the RRC message to the primary node (e.g., the MN) via inter-node control messages. Further, in one embodiment, upon receiving the RRC message for requesting SL-related configurations forwarded from the secondary node (e.g., the SN), the primary network node (e.g., the MN) generates an RRC message for triggering the requested RRC procedure and forwards it to the SN. Then the SN proceeds to forward the message by, e.g., embedding it in a Secondary Cell Group (SCG) RRC message to the SL UE 706-1 via, e.g., SRB3. In one embodiment, upon receiving the RRC message for requesting SL-related configurations forwarded from the SN, the primary network node sends a direct RRC message to trigger the requested RRC procedure to the SL UE 706-1 via, e.g., SRB1.

In one embodiment, the SL UE 706-1 receives a response or acknowledgment from the network (e.g., either from the base station 702 or from another RAN node (e.g., SN)) (step 806). Upon receiving the response/acknowledgment from the network, the SL UE 706-1 performs one or more actions (step 808). For example, in some embodiments, the response or acknowledgement includes a configuration (e.g., SLRB configuration or QoS mapping rule), and the SL UE 706-1 applies the configuration (e.g., SLRB configuration or QoS mapping rule) received in the response or acknowledgement. As another example, upon receiving the response/acknowledgment from the network (e.g., either from the base station 702 or from another RAN node (e.g., SN)), the SL UE 706-1 goes to RRC_IDLE/RRC_INACTIVE. As yet another example, upon receiving the response/acknowledgment from the network (e.g., either from the base station 702 or from another RAN node (e.g., SN)), the SL UE 706-1 releases the SL communication. In another embodiment, upon receiving the response/acknowledgment from the network (e.g., either from the base station 702 or from another RAN node (e.g., SN)), the SL UE 706-1 performs no action.

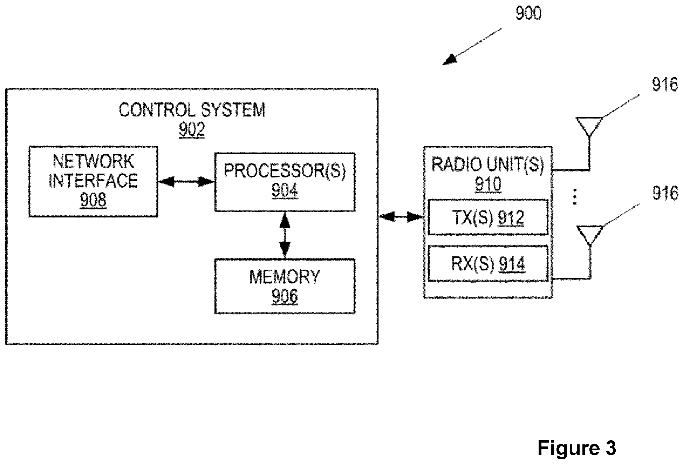

Figure 3 is a schematic block diagram of a radio access node 900 according to some embodiments of the present disclosure. The radio access node 900 may be, for example, a base station 702 (e.g., a gNB or NG-RAN node). As illustrated, the radio access node 900 includes a control system 902 that includes one or more processors 904 (e.g., Central Processing Units (CPUs), Application Specific Integrated Circuits (ASICs), Field Programmable Gate Arrays (FPGAs), and/or the like), memory 906, and a network interface 908. The one or more processors 904 are also referred to herein as processing circuitry. In addition, the radio access node 900 includes one or more radio units 910 that each includes one or more transmitters 912 and one or more receivers 914 coupled to one or more antennas 916. The radio units 910 may be referred to as or be part of radio interface circuitry. In some embodiments, the radio unit(s) 910 is external to the control system 902 and connected to the control system 902 via, e.g., a wired connection (e.g., an optical cable). However, in some other embodiments, the radio unit(s) 910 and potentially the antenna(s) 916 are integrated together with the control system 902. The one or more processors 904 operate to provide one or more functions of a radio access node 900 as described herein (e.g., one or more functions of the base station 702 as described above, e.g., with respect to Figure 2). In some embodiments, the function(s) are implemented in software that is stored, e.g., in the memory 906 and executed by the one or more processors 904.

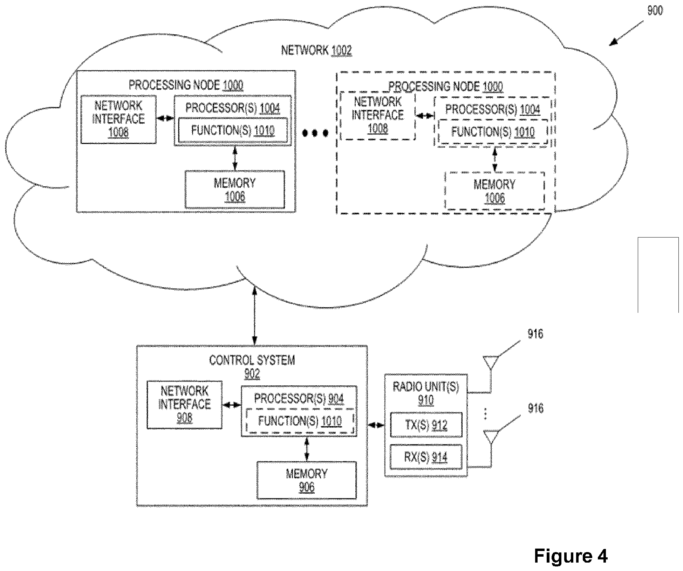

Figure 4 is a schematic block diagram that illustrates a virtualized embodiment of the radio access node 900 according to some embodiments of the present disclosure. This discussion is equally applicable to other types of network nodes. Further, other types of network nodes may have similar virtualized architectures.

As used herein, a "virtualized" radio access node is an implementation of the radio access node 900 in which at least a portion of the functionality of the radio access node 900 is implemented as a virtual component(s) (e.g., via a virtual machine(s) executing on a physical processing node(s) in a network(s)). As illustrated, in this example, the radio access node 900 includes the control system 902 that includes the one or more processors 904 (e.g., CPUs, ASICs, FPGAs, and/or the like), the memory 906, the network interface 908, and the one or more radio units 910 that each includes the one or more transmitters 912 and the one or more receivers 914 coupled to the one or more antennas 916, as described above. The control system 902 is connected to the radio unit(s) 910 via, for example, an optical cable or the like. The control system 902 is connected to one or more processing nodes 1000 coupled to or included as part of a network(s) 1002 via the network interface 908. Each processing node 1000 includes one or more processors 1004 (e.g., CPUs, ASICs, FPGAs, and/or the like), memory 1006, and a network interface 1008.

In this example, functions 1010 of the radio access node 900 described herein (e.g., one or more functions of the base station 702 as described above, e.g., with respect to Figure 2) are implemented at the one or more processing nodes 1000 or distributed across the control system 902 and the one or more processing nodes 1000 in any desired manner. In some particular embodiments, some or all of the functions 1010 of the radio access node 900 described herein are implemented as virtual components executed by one or more virtual machines implemented in a virtual environment(s) hosted by the processing node(s) 1000. As will be appreciated by one of ordinary skill in the art, additional signaling or communication between the processing node(s) 1000 and the control system 902 is used in order to carry out at least some of the desired functions 1010. Notably, in some embodiments, the control system 902 may not be included, in which case the radio unit(s) 910 communicate directly with the processing node(s) 1000 via an appropriate network interface(s).

In some embodiments, a computer program including instructions which, when executed by at least one processor, cause the at least one processor to carry out the functionality of the radio access node 900 or a node (e.g., a processing node 1000) implementing one or more of the functions 1010 of the radio access node 900 (e.g., one or more functions of the base station 702 as described above, e.g., with respect to Figure 2) in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

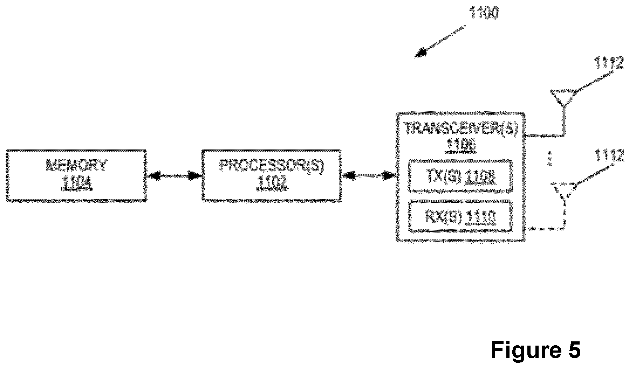

Figure 5 is a schematic block diagram of a UE 1100 according to some embodiments of the present disclosure. As illustrated, the UE 1100 includes one or more processors 1102 (e.g., CPUs, ASICs, FPGAs, and/or the like), memory 1104, and one or more transceivers 1106 each including one or more transmitters 1108 and one or more receivers 1110 coupled to one or more antennas 1112. The transceiver(s) 1106 includes radio-front end circuitry connected to the antenna(s) 1112 that is configured to condition signals communicated between the antenna(s) 1112 and the processor(s) 1102, as will be appreciated by one of ordinary skill in the art. The processors 1102 are also referred to herein as processing circuitry. The transceivers 1106 are also referred to herein as radio circuitry. In some embodiments, the functionality of the UE 1100 described above (e.g., one or more functions of the SL UE 706-1 as described above, e.g., with respect to Figure 2) may be fully or partially implemented in software that is, e.g., stored in the memory 1104 and executed by the processor(s) 1102. Note that the UE 1100 may include additional components not illustrated in Figure 5 such as, e.g., one or more user interface components (e.g., an input/output interface including a display, buttons, a touch screen, a microphone, a speaker(s), and/or the like and/or any other components for allowing input of information into the UE 1100 and/or allowing output of information from the UE 1100), a power supply (e.g., a battery and associated power circuitry), etc.

In some embodiments, a computer program including instructions which, when executed by at least one processor, causes the at least one processor to carry out the functionality of the UE 1100 according to any of the embodiments described herein (e.g., one or more functions of the SL UE 706-1 as described above, e.g., with respect to Figure 2) is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).
- Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

## Claims

1. A method implemented in a Sidelink, SL, User Equipment, UE, (706-1), the method comprising:
detecting (800) a trigger for sending a Radio Resource Control, RRC, information, wherein the RRC information comprises one of:
• a request for an RRC procedure related to one or more SL-related communications; and
• a message that both requests the RRC procedure related to the one or more SL-related configurations and comprises the information that informs the network about the one or more changes made by the SL UE (706-1) related to the one or more SL communications; and
sending (802) the RRC information to a network node;
wherein the RRC procedure comprises either an SL configuration procedure or an SL configuration update procedure.

2. The method of claim 1, wherein detecting (800) the trigger for sending the RRC information comprises detecting (800) at least one of the following criteria:
• a criterion that a SL Radio Bearer, SLRB, reconfiguration is needed;
• a criterion that there is a new SL Quality of Service, QoS, flow but no QoS mapping for the new SL QoS flow;
• a criterion that a new SL QoS mapping is needed;
• a criterion of a change in an SL-related UE context at the SL UE (706-1); and
• a criterion of performance of one or more autonomous SL-related actions by the SL UE (706-1) said criterion comprising a criterion of autonomously deciding a new SL-related QoS mapping rule or a criterion of autonomously updating an SL-related UE context.

3. The method of any one of claims 1 to 2, wherein:
detecting (800) the trigger for sending the RRC information comprises detecting (800) the trigger for sending the RRC information while the SL UE (706-1) is in an idle or inactive state; and
sending (802) the RRC information to the network node comprises sending (802) the RRC information to the network node upon detecting the trigger and transitioning from the idle or inactive state to a connected state.

4. The method of any one of claims 1 to 3, wherein:
sending (802) the RRC information to the network node comprises sending (802) the RRC information to the network node when in a connected state; and
the RRC information comprises a SidelinkUEInformation message.

5. The method of any one of claims 1 to 4, wherein:
sending (802) the RRC information to the network node comprises sending (802) the RRC information to the network node when in a connected state; and
the RRC information comprises an existing New Radio, NR, or Long Term Evolution, LTE, RRC information; wherein the existing NR or LTE RRC information comprises a UEAssistanceInformation message, a ULInformationTransfer message, or a ULInformationTransferMRDC message.

6. The method of any one of claims 1 to 5, wherein:
sending (802) the RRC information to the network node comprises sending (802) the RRC information to the network node when in an idle or inactive state; and
the RRC information comprises a RRCResumeRequest message or a RRCSetupRequest message.

7. The method of any one of claims 1 to 2, wherein:
sending (802) the RRC information to the network node comprises sending (802) the RRC information to the network node when in an idle or inactive state; and
the RRC information comprises a new RRC message that is common for two or more Radio Access Technologies, RATs.

8. The method of any one of claims 1 to 2, wherein:
sending (802) the RRC information to the network node comprises sending (802) the RRC information to the network node when in an idle or inactive state; and
the RRC information comprises a new RRC message that is used for SL only.

9. The method of any one of claims 1 to 8, wherein the RRC information comprises at least one of:
• a flag that indicates a request for a new SLRB configuration;
• QoS flow information for one or more QoS flows at the SL UE (706-1);
• a new SL-related UE context for the SL UE (706-1).

10. A Sidelink, SL, User Equipment, UE, (706-1), adapted to perform the method of any one of claims 1 to 9.

11. A method implemented in a network node, comprising:
receiving (802) a Radio Resource Control, RRC, message from a sidelink, SL, User Equipment, UE, (706-1), wherein the RRC information comprises one of:
• a request for an RRC procedure related to one or more SL-related communications; and
• a message that both requests the RRC procedure related to the one or more SL-related configurations and comprises the information about the one or more changes made by the SL UE (706-1) related to the one or more SL communications; and
taking (804) one or more actions based on the RRC information;
wherein the RRC procedure comprises either an SL configuration procedure or an SL configuration update procedure.

12. The method of claim 11, wherein:
the one or more actions comprise sending a response to the SL UE (706-1); and
the response comprises the one or more SL-related configurations for the SL UE (706-1) or one or more updates to the one or more SL-related configurations for the SL UE (706-1).

13. The method of any one of claims 11 to 12, wherein:
receiving (802) the RRC information from the SL UE (706-1) comprises receiving (802) the RRC information from the SL UE (706-1) while the SL UE (706-1) is in a connected state; and
the RRC information comprises a SidelinkUEInformation message.

14. The method of any one of claims 11 to 13, wherein:
receiving (802) the RRC information from the SL UE (706-1) comprises receiving (802) the RRC information from the SL UE (706-1) while the SL UE (706-1) is in a connected state; and
the RRC information comprises one of:
an existing New Radio, NR, or Long Term Evolution, LTE, RRC information;
wherein the existing NR or LTE RRC information comprises a UEAssistanceInformation message, a ULInformationTransfer message, or a ULInformationTransferMRDC message.

15. A base station adapted to perform the method of any one of claims 11 to 15.

## Patentansprüche

1. Verfahren, das in einer Benutzereinrichtung (User Equipment), UE, (706-1) für einen Sidelink, SL, implementiert ist, wobei das Verfahren Folgendes umfasst:
Erkennen (800) eines Auslösers zum Senden von Informationen einer Funkressourcensteuerung (Radio Resource Control), RRC,
wobei die RRC-Informationen eines von Folgenden umfassen:
• eine Anforderung einer RRC-Prozedur, die sich auf einen oder mehreren SL-bezogene Kommunikationsvorgänge bezieht; und
• eine Nachricht, die sowohl die RRC-Prozedur, die sich auf die eine oder die mehreren SL-bezogenen Konfigurationen bezieht, anfordert als auch die Informationen umfasst, die das Netzwerk über die eine oder die mehreren auf den einen oder die mehreren SL-Kommunikationsvorgänge bezogenen Veränderungen informieren, die von der SL-UE (706-1) vorgenommen wurden; und
Senden (802) der RRC-Informationen an einen Netzwerkknoten;
wobei die RRC-Prozedur entweder eine SL-Konfigurationsprozedur oder eine SL-Konfigurationsaktualisierungsprozedur umfasst.

2. Verfahren nach Anspruch 1, wobei das Erkennen (800) des Auslösers zum Senden der RRC-Informationen Erkennen (800) mindestens eines der folgenden Kriterien umfasst:
• ein Kriterium, dass eine Neukonfiguration des SL-Funkträgers (SL Radio Bearer), SLRB, erforderlich ist;
• ein Kriterium, dass ein neuer Fluss der SL-Dienstgüte (SL Quality of Service), QoS, aber keine QoS-Zuordnung für den neuen SL-QoS-Fluss vorhanden ist;
• ein Kriterium, dass eine neue SL-QoS-Zuordnung erforderlich ist;
• ein Kriterium einer Veränderung in einem SL-bezogenen UE-Kontext an der SL-UE (706-1); und
• ein Kriterium der Durchführung einer oder mehrerer autonomer SL-bezogener Aktionen durch die SL-UE (706-1), wobei das Kriterium ein Kriterium des autonomen Entscheidens über eine neue SL-bezogene QoS-Zuordnungsregel oder ein Kriterium des autonomen Aktualisierens eines SL-bezogenen UE-Kontexts umfasst.

3. Verfahren nach einem der Ansprüche 1 bis 2, wobei:
das Erkennen (800) des Auslösers zum Senden der RRC-Informationen Erkennen (800) des Auslösers zum Senden der RRC-Informationen umfasst, während sich die SL-UE (706-1) in einem Leerlaufzustand oder inaktiven Zustand befindet; und
das Senden (802) der RRC-Informationen an den Netzwerkknoten Senden (802) der RRC-Informationen an den Netzwerkknoten beim Erkennen des Auslösers und beim Übergang vom Leerlaufzustand oder inaktiven Zustand in einen verbundenen Zustand umfasst.

4. Verfahren nach einem der Ansprüche 1 bis 3, wobei:
das Senden (802) der RRC-Informationen an den Netzwerkknoten Senden (802) der RRC-Informationen an den Netzwerkknoten in einem verbundenen Zustand umfasst; und
die RRC-Informationen eine SidelinkUEInformation-Nachricht umfassen.

5. Verfahren nach einem der Ansprüche 1 bis 4, wobei:
das Senden (802) der RRC-Informationen an den Netzwerkknoten Senden (802) der RRC-Informationen an den Netzwerkknoten in einem verbundenen Zustand umfasst; und
die RRC-Informationen vorhandene RRC-Informationen für New Radio, NR, oder Long Term Evolution, LTE, umfassen; wobei die vorhandenen NR- oder LTE-RRC-Informationen eine UEAssistanceInformation-Nachricht, eine ULInformationTransfer-Nachricht oder eine ULInformationTransferMRDC-Nachricht umfassen.

6. Verfahren nach einem der Ansprüche 1 bis 5, wobei:
das Senden (802) der RRC-Informationen an den Netzwerkknoten Senden (802) der RRC-Informationen an den Netzwerkknoten in einem Leerlaufzustand oder inaktiven Zustand umfasst; und
die RRC-Informationen eine RRCResumeRequest-Nachricht oder eine RRCSetupRequest-Nachricht umfassen.

7. Verfahren nach einem der Ansprüche 1 bis 2, wobei:
das Senden (802) der RRC-Informationen an den Netzwerkknoten Senden (802) der RRC-Informationen an den Netzwerkknoten in einem Leerlaufzustand oder inaktiven Zustand umfasst; und
die RRC-Informationen eine neue RRC-Nachricht umfassen, die für zwei oder mehr Funkzugangstechnologien (Radio Access Technologies), RATs, gemeinsam ist.

8. Verfahren nach einem der Ansprüche 1 bis 2, wobei:
das Senden (802) der RRC-Informationen an den Netzwerkknoten Senden (802) der RRC-Informationen an den Netzwerkknoten in einem Leerlaufzustand oder inaktiven Zustand umfasst; und
die RRC-Informationen eine neue RRC-Nachricht umfassen, die nur für den SL verwendet wird.

9. Verfahren nach einem der Ansprüche 1 bis 8, wobei die RRC-Informationen mindestens eines von Folgenden umfassen:
• ein Flag, das eine Anforderung für eine neue SLRB-Konfiguration angibt;
• QoS-Flussinformationen für einen oder mehrere QoS-Flüsse an der SL-UE (706-1);
• einen neuen SL-bezogenen UE-Kontext für die SL-UE (706-1).

10. Benutzereinrichtung, UE, (706-1) für einen Sidelink, SL, die dazu angepasst ist, das Verfahren nach einem der Ansprüche 1 bis 9 durchzuführen.

11. Verfahren, das in einem Netzwerkknoten implementiert ist, umfassend:
Empfangen (802) einer Nachricht einer Funkressourcensteuerung, RRC, von einer Benutzereinrichtung, UE, (706-1) für einen Sidelink, SL, wobei die RRC-Informationen eines von Folgenden umfassen:
• eine Anforderung einer RRC-Prozedur, die sich auf einen oder mehrere SL-bezogene Kommunikationsvorgänge bezieht; und
• eine Nachricht, die sowohl die RRC-Prozedur, die sich auf die eine oder die mehreren SL-bezogenen Konfigurationen bezieht, anfordert als auch die Informationen über die eine oder die mehreren von der SL-UE (706-1) vorgenommenen Veränderungen, die sich auf die eine oder mehrere SL-Kommunikationsvorgänge beziehen, umfasst; und
Ergreifen (804) einer oder mehrerer Aktionen basierend auf den RRC-Informationen;
wobei die RRC-Prozedur entweder eine SL-Konfigurationsprozedur oder eine SL-Konfigurationsaktualisierungsprozedur umfasst.

12. Verfahren nach Anspruch 11, wobei:
die eine oder mehreren Aktionen Senden einer Antwort an die SL-UE (706-1) umfassen; und
die Antwort die eine oder die mehreren SL-bezogenen Konfigurationen für die SL-UE (706-1) oder eine oder mehrere Aktualisierungen für die eine oder die mehreren SL-bezogenen Konfigurationen für die SL-UE (706-1) umfasst.

13. Verfahren nach einem der Ansprüche 11 bis 12, wobei:
das Empfangen (802) der RRC-Informationen von der SL-UE (706-1) Empfangen (802) der RRC-Informationen von der SL-UE (706-1) umfasst, während sich die SL-UE (706-1) in einem verbundenen Zustand befindet; und
die RRC-Informationen eine SidelinkUEInformation-Nachricht umfassen.

14. Verfahren nach einem der Ansprüche 11 bis 13, wobei:
das Empfangen (802) der RRC-Informationen von der SL-UE (706-1) Empfangen (802) der RRC-Informationen von der SL-UE (706-1) umfasst, während sich die SL-UE (706-1) in einem verbundenen Zustand befindet; und
die RRC-Informationen eines von Folgendem umfassen:
vorhandene RRC-Informationen für New Radio, NR, oder Long Term Evolution, LTE;
wobei die vorhandenen NR- oder LTE-RRC-Informationen eine UEAssistancelnformation-Nachricht, eine ULInformationTransfer-Nachricht oder eine ULInformationTransferMRDC-Nachricht umfassen.

15. Basisstation, die dazu angepasst ist, das Verfahren nach einem der Ansprüche 11 bis 15 durchzuführen.

## Revendications

1. Procédé mis en œuvre dans un équipement utilisateur, UE, de liaison latérale, SL, (706-1), le procédé comprenant :
la détection (800) d'un déclencheur pour l'envoi d'informations de contrôle de ressources radio, RRC, dans lequel les informations RRC comprennent l'un parmi :
• une demande de procédure RRC relative à une ou plusieurs communications liées à la SL ; et
• un message qui demande à la fois la procédure RRC relative à une ou plusieurs configurations liées à la SL et comprend les informations qui informent le réseau sur une ou plusieurs modifications apportées par l'UE SL (706-1) liées à une ou plusieurs communications SL ; et
l'envoi (802) des informations RRC à un nœud de réseau ;
dans lequel la procédure RRC comprend soit une procédure de configuration SL, soit une procédure de mise à jour de configuration SL.

2. Procédé selon la revendication 1, dans lequel la détection (800) du déclencheur d'envoi des informations RRC comprend la détection (800) d'au moins l'un des critères suivants :
• un critère selon lequel une reconfiguration du porteur radio SL, SLRB, est nécessaire ;
• un critère selon lequel il existe un nouveau flux de qualité de service, QoS, SL mais aucun mappage QoS pour le nouveau flux QoS SL ;
• un critère selon lequel un nouveau mappage SL QoS est nécessaire ;
• un critère de changement dans un contexte d'UE lié au SL au niveau de l'UE SL (706-1) ; et
• un critère d'exécution d'une ou plusieurs actions autonomes liées au SL par l'UE SL (706-1), ledit critère comprenant un critère de décision autonome d'une nouvelle règle de mappage QoS liée au SL ou un critère de mise à jour autonome d'un contexte UE lié au SL.

3. Procédé selon l'une quelconque des revendications 1 à 2, dans lequel :
la détection (800) du déclencheur d'envoi des informations RRC comprend la détection (800) du déclencheur d'envoi des informations RRC pendant que l'UE SL (706-1) est dans un état en attente ou inactif ; et
l'envoi (802) des informations RRC au nœud de réseau comprend l'envoi (802) des informations RRC au nœud de réseau lors de la détection du déclencheur et de la transition de l'état en attente ou inactif vers un état connecté.

4. Procédé selon l'une quelconque des revendications 1 à 3, dans lequel :
l'envoi (802) des informations RRC au nœud de réseau comprend l'envoi (802) des informations RRC au nœud de réseau lorsqu'il est dans un état connecté ; et
les informations RRC comprennent un message SidelinkUEInformation.

5. Procédé selon l'une quelconque des revendications 1 à 4, dans lequel :
l'envoi (802) des informations RRC au nœud de réseau comprend l'envoi (802) des informations RRC au nœud de réseau lorsqu'il est dans un état connecté ; et
les informations RRC comprennent des informations RRC de nouvelle radio, NR, ou d'évolution à long terme, LTE existantes ; les informations RRC NR ou LTE existantes comprenant un message UEAssistanceInformation, un message ULInformationTransfer ou un message ULInformationTransferMRDC.

6. Procédé selon l'une quelconque des revendications 1 à 5, dans lequel :
l'envoi (802) des informations RRC au nœud de réseau comprend l'envoi (802) des informations RRC au nœud de réseau lorsqu'il est dans un état en attente ou inactif ; et
les informations RRC comprennent un message RRCResumeRequest ou un message RRCSetupRequest.

7. Procédé selon l'une quelconque des revendications 1 à 2, dans lequel :
l'envoi (802) des informations RRC au nœud de réseau comprend l'envoi (802) des informations RRC au nœud de réseau lorsqu'il est dans un état en attente ou inactif ; et
les informations RRC comprennent un nouveau message RRC commun à deux ou plusieurs technologies d'accès radio, RAT.

8. Procédé selon l'une quelconque des revendications 1 à 2, dans lequel :
l'envoi (802) des informations RRC au nœud de réseau comprend l'envoi (802) des informations RRC au nœud de réseau lorsqu'il est dans un état en attente ou inactif ; et
les informations RRC comprennent un nouveau message RRC qui est utilisé uniquement pour la SL.

9. Procédé selon l'une quelconque des revendications 1 à 8, dans lequel les informations RRC comprennent au moins l'un parmi :
• un indicateur qui indique une demande de nouvelle configuration SLRB ;
• des informations QoS pour un ou plusieurs flux QoS au niveau de l'UE SL (706-1) ;
• un nouveau contexte UE lié au SL pour l'UE SL (706-1).

10. Equipement utilisateur, UE, de liaison latérale, SL, (706-1), adapté pour mettre en œuvre le procédé selon l'une quelconque des revendications 1 à 9.

11. Procédé mis en œuvre dans un nœud de réseau, comprenant :
la réception (802) d'un message de contrôle des ressources radio (RRC) provenant d'un équipement utilisateur, UE, de liaison latérale, SL, (706-1), dans lequel les informations RRC comprennent l'un parmi :
• une demande de procédure RRC relative à une ou plusieurs communications liées à la SL ; et
• un message qui demande à la fois la procédure RRC relative à une ou plusieurs configurations liées à la SL et comprend les informations sur une ou plusieurs modifications apportées par l'UE SL (706-1) relatives à une ou plusieurs communications SL ; et
la prise (804) d'une ou plusieurs actions sur la base des informations RRC ;
dans lequel la procédure RRC comprend soit une procédure de configuration SL, soit une procédure de mise à jour de configuration SL.

12. Procédé selon la revendication 11, dans lequel :
les une ou plusieurs actions comprennent l'envoi d'une réponse à l'UE SL (706-1) ; et
la réponse comprend une ou plusieurs configurations liées à la SL pour l'UE SL (706-1) ou une ou plusieurs mises à jour d'une ou plusieurs configurations liées à la SL pour l'UE SL (706-1).

13. Procédé selon l'une quelconque des revendications 11 à 12, dans lequel :
la réception (802) des informations RRC provenant de l'UE SL (706-1) comprend la réception (802) des informations RRC provenant de l'UE SL (706-1) pendant que l'UE SL (706-1) est dans un état connecté ; et
les informations RRC comprennent un message SidelinkUEInformation.

14. Procédé selon l'une quelconque des revendications 11 à 13, dans lequel :
la réception (802) des informations RRC provenant de l'UE SL (706-1) comprend la réception (802) des informations RRC provenant de l'UE SL (706-1) pendant que l'UE SL (706-1) est dans un état connecté ; et
les informations du RRC comprennent l'une des suivantes :
des informations RRC de nouvelle radio, NR, ou d'évolution à long terme, LTE, existantes ;
dans lequel les informations RRC NR ou LTE existantes comprennent un message UEAssistanceInformation, un message ULInformationTransfer ou un message ULInformationTransferMRDC.

15. Station de base adaptée pour mettre en œuvre le procédé selon l'une quelconque des revendications 11 à 15.
